# FASCICULE DE BREVET EUROPEEN

(11) **EP 3 724 457 B1**
(45) Date de publication et mention de la délivrance du brevet: **17.11.2021**
(21) Numéro de dépôt: 18833938.6
(22) Date de dépôt: 13.12.2018
(51) Int. Cl.: F01D 19/00, F02C 7/26

(54) **PROCÉDÉ DE DÉTECTION D'ALLUMAGE DE TURBOMACHINE**
VERFAHREN ZUR ERKENNUNG DER ZÜNDUNG EINES TURBINENTRIEBWERKS
METHOD FOR DETECTING THE IGNITION OF A TURBINE ENGINE

(30) Priorité: 13.12.2017 FR 1762059
(43) Date de publication de la demande: 21.10.2020
(73) Titulaire: SAFRAN AIRCRAFT ENGINES, 75015 Paris (FR)
(72) Inventeur: WIDEMANN, Adel Cédric Abir, 77550 MOISSY-CRAMAYEL (FR); RAILLARD, Nicolas, 77550 MOISSY-CRAMAYEL (FR); DJELASSI, Cedrik, 77550 MOISSY-CRAMAYEL CEDEX (FR)
(74) Mandataire: Regimbeau
(86) Numéro de dépôt international: PCT/FR2018/053278
(87) Numéro de publication internationale: WO 2019/115964

(56) Documents cités:
- WO-A1-2014/037649
- US-A1- 2007 051 111
- US-A1- 2012 006 032
- US-A1- 2015 300 918
- US-A1- 2016 305 329

## Description

### DOMAINE TECHNIQUE

L'invention concerne un procédé de détection de l'allumage d'une turbomachine.

L'invention vise plus spécifiquement un procédé de détection de l'allumage d'une chambre de combustion de turbomachine à partir de la température des gaz d'échappement. En particulier, l'invention vise à déterminer en temps réel l'état d'allumage de la chambre de combustion, correspondant à la réussite ou à l'échec d'une tentative d'allumage.

### ETAT DE LA TECHNIQUE

Une turbomachine connue, telle qu'un turboréacteur d'aéronef, comprend classiquement un compresseur, une chambre de combustion et une turbine, alignés dans cet ordre d'amont en aval, par rapport au sens d'écoulement d'air dans la turbomachine. La chambre de combustion admet de l'air préalablement compressé par le compresseur, y injecte du carburant, et enflamme le mélange qui se détend ensuite à travers la turbine pour finalement être rejeté de sorte à, par exemple, générer la poussée nécessaire au déplacement de l'aéronef. Une partie de l'énergie générée au sein la chambre de combustion est en outre prélevée par la turbine afin de mettre en rotation le compresseur.

La détection de l'allumage de la chambre de combustion est un critère essentiel. En effet, elle conditionne les actions à mener en vue de réussir un démarrage, ou de rallumer le turboréacteur en vol.

A la suite de l'allumage de la chambre de combustion, un flux d'air chaud appelé « gaz d'échappement », s'écoule à travers la turbomachine, ce qui entraîne une augmentation rapide de la température en aval de la chambre de combustion, notamment au niveau de la turbine et de son carter. Il est donc connu de placer à cet endroit un ou plusieurs capteur(s) de température afin de mesure l'évolution de la température des gaz d'échappement (ou EGT, pour« Exhaust Gas Temperature, dans la terminologie anglo-saxonne).

Un procédé connu de détection de l'allumage de la chambre de combustion consiste en le contrôle des mesures d'EGT fournies par ces capteurs. Plusieurs logiques de contrôle peuvent d'ailleurs être mises en oeuvre en parallèle, par exemple par un calculateur de la turbomachine.

Quelle que soit la logique de contrôle actuellement connue, la turbomachine sera considérée comme étant « allumée » si l'EGT a augmenté d'un certain niveau depuis le début de l'injection du carburant. Pour cela, la valeur d'EGT est d'abord mémorisée, par exemple au lancement de la séquence de démarrage. A la suite de l'injection du carburant et du claquage des bougies (i.e. une fois le régime d'allumage atteint), les valeurs successives d'EGT mesurées sont comparées à la valeur mémorisée. Si un seuil d'augmentation prédéterminé est atteint, l'allumage de la chambre de combustion est détecté. Dans ce cas, les lois de contrôle d'allumage changent au profit de lois de contrôle relatives à l'accélération, ou enroulement, de la turbomachine, jusqu'à atteindre le régime de ralenti. En revanche, si les valeurs d'EGT mesurées ne dépassent pas ce seuil au bout d'un certain temps prédéterminé, une alerte indiquant que la chambre de combustion n'est pas allumée est remonté au pilote.

Or il est possible que l'EGT ait déjà augmenté avant le démarrage. Ce phénomène apparaît par exemple lorsqu'une première tentative d'allumage a déjà été mise en oeuvre, puis interrompue, ou suite à un décollement tournant lié à l'instabilité aérodynamique du compresseur. Dans ce cas, lorsque l'allumage de la chambre de combustion a eu lieu, les valeurs d'EGT sont déjà trop hautes et n'évoluent pas de la même manière que dans le cas nominal. Le seuil d'augmentation d'EGT attendu n'a donc pas pu être atteint à temps et le démarrage a été interrompu à tort alors que le moteur était bien allumé.

Il existe donc un besoin d'amélioration de procédé de détection d'allumage de chambre de combustion, notamment dans le cas où la température des gaz d'échappement est supérieure à la normale au moment de l'injection du carburant, et du claquage des bougies.

On connait par ailleurs la publication FR3044703A1 traitant d'un procédé pour déterminer un instant auquel se produit l'allumage d'une chambre de combustion de turbomachine lors d'une tentative d'allumage réussie. Le procédé permet ainsi de déterminer la durée d'allumage, laquelle peut être utilisée comme indicateur de la dégradation du système global de démarrage de la turbomachine en cas notamment de déviation confirmée par rapport à une durée de référence. La logique du procédé est appliquée sur des données enregistrées pendant une mission de vol et qui sont généralement traitées après la mission pour permettre la surveillance de l'état de santé (« health monitoring », dans la terminologie anglo-saxonne) de la turbomachine. Une application en temps réel du procédé reste possible, mais demande notamment des ressources en calcul importantes.

Le document US 2012/006032 A1 présente un procédé de détection d'allumage dans une chambre de combustion basé sur la lecture d'un capteur de température des gaz d'échappement et sur un taux de changement de vitesse de rotation de la turbine haute pression.

### RESUME DE L'INVENTION

Un but de l'invention est de détecter l'allumage d'une chambre de combustion de turbomachine en cas de redémarrage de la turbomachine, au sol ou en vol.

Un autre but de l'invention est de détecter l'allumage d'une chambre de combustion de turbomachine suite à un décollement tournant de l'air en sortie de compresseur.

Un autre but de l'invention est de détecter l'allumage d'une chambre de combustion de turbomachine en cas d'invalidité de la sonde de température des gaz d'échappement.

Un autre but de l'invention est de détecter l'allumage d'une chambre de combustion de turbomachine en cas de coupure intempestive d'arrivée de carburant.

Un autre but de l'invention est de détecter l'allumage d'une chambre de combustion de turbomachine en cas de réinitialisation d'une ou plusieurs voies du calculateur, au démarrage ou en vol.

L'invention propose notamment un procédé de détection d'allumage d'une chambre de combustion de turbomachine, le procédé comprenant les étapes de :
- réception d'une première mesure de la température de gaz d'échappement en aval de la chambre de combustion, avant une tentative d'allumage de ladite chambre de combustion,
- réception d'un seuil de température,
- réception d'un critère secondaire de détection,
- actualisation du seuil de température reçu en fonction du critère secondaire de détection reçu,
- réception d'une deuxième mesure de la température des gaz d'échappement, après la tentative d'allumage de la chambre de combustion,
- comparaison entre le seuil de température actualisé et la différence entre la première et la deuxième mesure de température des gaz d'échappement, et
- détermination de l'état d'allumage de la chambre de combustion, correspondant à la réussite ou à l'échec de la tentative d'allumage, en fonction du résultat de l'étape de comparaison.

Dans un tel procédé, l'étape d'actualisation du seuil de détection de température permet avantageusement de prendre en compte l'état de fonctionnement de la turbomachine influant sur le démarrage de la chambre de combustion. De cette manière, l'évolution de la température des gaz d'échappement n'est plus un critère absolu de détection, mais devient relatif à l'état global de la turbomachine. En fonction de critères secondaires relatifs aux éléments qui entourent la chambre de combustion, comme par exemple le régime moteur ou la pression en sortie de compresseur, l'évolution de la température des gaz d'échappement diffère de son évolution nominale, alors même que l'état d'allumage est le même. Grâce à un tel procédé, l'alerte rendant compte de l'allumage qui est renvoyée au pilote n'est plus biaisée, ce qui réduit le nombre d'identifications erronées d'échecs d'allumage ou de rallumage, au sol ou en vol.

Le procédé selon l'invention peut en outre comprendre les caractéristiques suivantes, prises seules ou en combinaison :
- l'étape de réception d'une première mesure de la température des gaz d'échappement est mise en oeuvre à la fin d'une phase d'initiation de la séquence de démarrage de la turbomachine, lorsque la température des gaz d'échappement est minimale,
- l'actualisation du seuil de température consiste en un abaissement de la valeur dudit seuil si le critère secondaire est validé, et en le maintien de la valeur dudit seuil sinon,
- le critère secondaire est une information relative à l'évolution de la pression en sortie de compresseur haute pression de la turbomachine, le critère secondaire étant validé si une augmentation brusque de ladite pression est détectée,
- le critère secondaire est une information relative au régime moteur de la turbomachine, le critère secondaire étant validé si le régime moteur est compris dans un intervalle déterminé pendant une durée déterminée,
- il comprend en outre des étapes de :
   ∘ réception d'un premier seuil de régime moteur,
   ∘ réception d'une mesure du régime moteur,
   ∘ comparaison de la mesure au premier seuil de régime moteur, et
   ∘ détermination de l'état d'allumage de la chambre de combustion en fonction du résultat de l'étape de comparaison,
- il comprend en outre des étapes de :
   ∘ réception d'un seuil d'accélération du régime moteur,
   ∘ réception d'un intervalle de temps de mesure,
   ∘ réception d'une pluralité de mesures successives de l'accélération du régime moteur pendant l'intervalle de temps de mesure reçu à l'étape précédente, et
   ∘ comparaison de la pluralité de mesures successives avec le seuil d'accélération reçu, et
   ∘ détermination de l'état d'allumage de la chambre de combustion en fonction du résultat de l'étape de comparaison, et
- il comprend en outre des étapes de :
   ∘ réception d'un deuxième seuil de régime moteur,
   ∘ réception d'une information relative à l'état des commandes de la turbomachine,
   ∘ réception d'une mesure du régime moteur,
   ∘ comparaison de la mesure au deuxième seuil de régime moteur, et
   ∘ détermination de l'état d'allumage de la chambre de combustion en fonction du résultat de l'étape de comparaison et de l'information relative à l'état des commandes.

L'invention porte en outre sur un système de détection de l'allumage d'une chambre de combustion de turbomachine, le système comprenant un capteur de température des gaz d'échappement, le système comprenant en outre un calculateur configuré pour mettre en oeuvre un procédé tel que précédemment décrit.

L'invention porte enfin sur une turbomachine comprenant une turbomachine comprenant un système tel que précédemment décrit.

### DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :
- la figure 1 illustre schématiquement une turbomachine connue comprenant un exemple de réalisation d'un système de détection selon l'invention,
- les figure 2a à 2d illustrent schématiquement différents modes de réalisation d'un procédé de détection selon l'invention, et
- la figure 3 illustre des exemples d'évolution du régime moteur, de la température des gaz d'échappement et de la pression en sortie de compresseur haute pression lors d'un démarrage de turbomachine.

### DESCRIPTION DETAILLEE DE L'INVENTION

Un exemple de réalisation d'un procédé selon l'invention va maintenant être décrit, en référence aux figures.

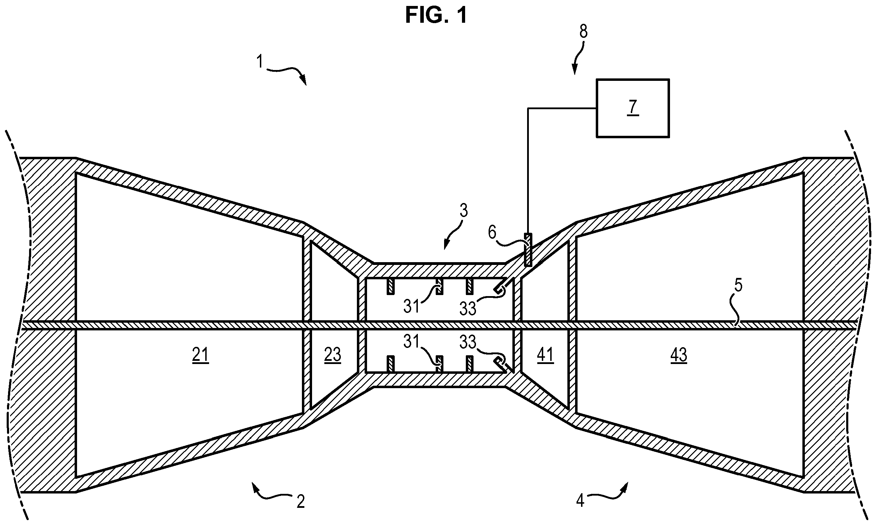

En référence à la figure 1, une turbomachine connue 1, tel qu'un turboréacteur d'aéronef, comprend une chambre de combustion 3 dont l'allumage est essentiel au démarrage, ou redémarrage, de la turbomachine 1 au sol, ou en vol. La chambre de combustion 3 est disposée entre une section de compresseur 2, appelée compresseur haute pression, et une section de turbine 4, appelée turbine haute pression, reliées entre elles par un arbre rotatif 5 appelé arbre haute pression. Les sections de compresseur 2 et de turbine 4 peuvent en outre chacune comprendre, de manière connue, plusieurs étages haute pression respectivement 21, 23, et 41, 43, reliés entre eux par le même arbre rotatif 5, pour former un corps haute pression d'une turbomachine à double corps. En fonctionnement, l'air est compressé par la section de compresseur 2, puis circule dans la chambre de combustion 3 au sein de laquelle du carburant est injecté par des injecteurs 31 configurés à cet effet. Le mélange air-carburant est ensuite enflammé par l'action de bougies 33. Les produits de cette combustion, appelés gaz d'échappement, sont ensuite détendus à travers la section de turbine 4. Dans la suite, on désignera par « gaz d'échappement » l'air circulant à travers la section de turbine 4, en aval de la chambre de combustion, que cet air ait été préalablement enflammé au sein de la chambre de combustion 3 (fonctionnement nominal), ou non (initiation de la séquence de démarrage). La température des gaz d'échappement est donc directement reliée à la température de la section de turbine 4 et indique l'état d'allumage de la chambre de combustion 3.

De manière générale, la séquence de démarrage de la turbomachine 1 comprend une première phase au cours de laquelle la vitesse de rotation de l'arbre rotatif 5 augmente sur une plage temporelle comprise entre la réception d'un ordre de démarrage de la turbomachine 1, par exemple en provenance du pilote, et un instant où débute l'injection de carburant dans la chambre de combustion 3 de la turbomachine 1. Lors de cette première phase, l'entraînement de l'arbre rotatif 5 est mis en oeuvre indépendamment de l'action de la section de turbine 4, par exemple au moyen d'un démarreur (non représenté). Cette première phase peut alors être qualifiée de phase de pré-injection.

Par ailleurs, la séquence de démarrage comprend une deuxième phase, postérieure à la première phase, qui s'achève lorsque l'arbre rotatif n'est plus entraîné indépendamment de l'action de la section de turbine 4, par exemple par débrayage du démarreur. Cette deuxième phase débute à l'allumage du mélange air-carburant dans la chambre de combustion 3, et peut-être qualifiée de phase post-allumage.

Dans tout ce qui va suivre, une phase d'initiation de la séquence de démarrage correspond de préférence à la première phase décrite ci-dessus, dite phase de pré-injection, qui se prolonge jusqu'à l'instant où débute l'allumage du mélange air-carburant.

Au démarrage au sol, la turbomachine 1 est d'abord entraînée par le démarreur (non représenté) afin de comprimer suffisamment d'air pour permettre la réussite de l'allumage de la chambre de combustion 3. Lors d'un redémarrage en vol, si le régime moteur de la turbomachine est suffisamment important (phénomène de « windmilling » dans la terminologie anglo-saxonne), l'allumage de la chambre de combustion 3 peut directement être mis en oeuvre. Sinon, il est nécessaire de recourir au démarreur, comme lors d'un démarrage au sol. Au démarrage comme au redémarrage, l'allumage de la chambre de combustion 3 est mis en oeuvre par injection de carburant et claquage des bougies 33.

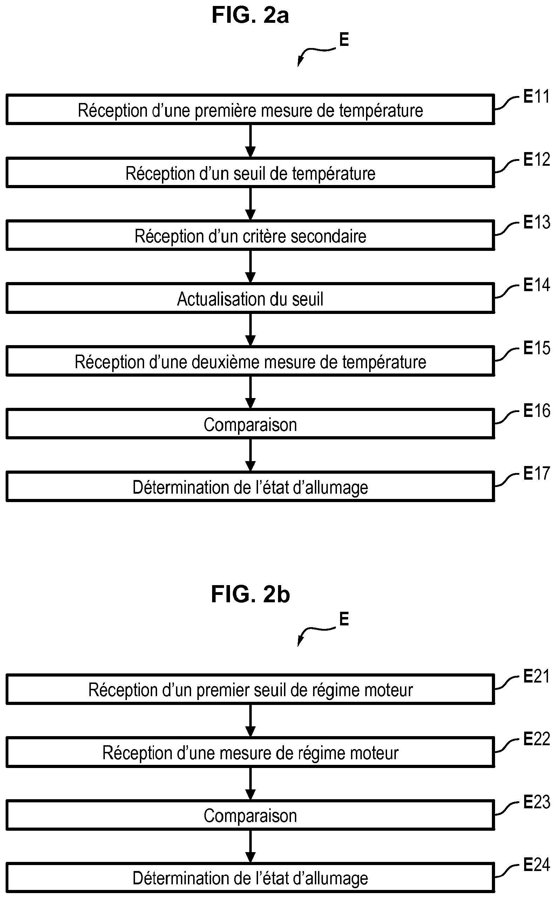

Dans un premier mode de réalisation, en référence à la figure 2a, le procédé de détection E comprend une première étape E11 de réception d'une première mesure MT1 de la température de gaz d'échappement, appelée mesure initiale, avant une tentative d'allumage de la chambre de combustion 3. Cette mesure initiale MT1 sert de référence pour contrôler l'allumage de la chambre de combustion 3. C'est la raison pour laquelle la mesure initiale MT1 est en générale mémorisée en vue de comparaison ultérieure, comme il sera décrit plus précisément.

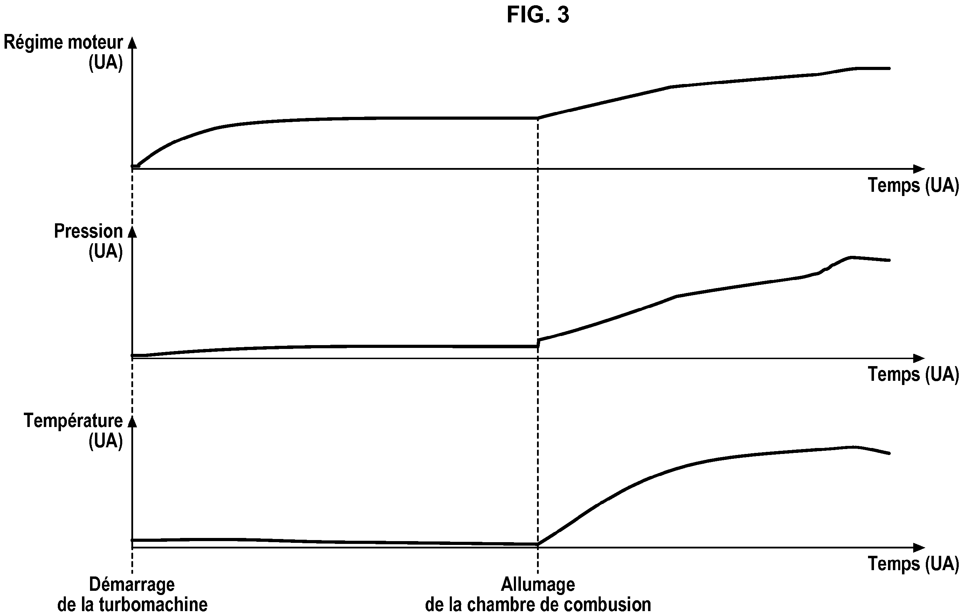

Avantageusement, l'étape de réception E11 de la mesure initiale MT1 est mise en oeuvre à la fin d'une phase d'initiation de la séquence de démarrage de la turbomachine 1. Il est en effet important de mémoriser la valeur minimale de température des gaz d'échappement atteinte après le lancement de la séquence de démarrage, ou redémarrage, de la turbomachine 1. Or, lorsque ladite séquence est initiée, l'entraînement de l'arbre rotatif 5 par le démarreur, ou le windmilling, génère une circulation d'air dans la turbomachine 1 qui est ainsi ventilée et progressivement refroidie, comme illustré sur la figure 3. La température des gaz d'échappement diminue donc durant toute la séquence initiale de démarrage de la turbomachine 1 de sorte que, lorsque l'allumage de la chambre de combustion 3 est mis en oeuvre, la température des gaz d'échappement est minimale. Ceci permet de bénéficier d'une mesure initiale de référence qui est l'exacte image de la température de la chambre de combustion 3 au moment de son allumage.

Lors d'une deuxième étape E12, un seuil de température ST est reçu et, selon un mode de réalisation privilégié, également mémorisé. Ce seuil de température ST fournit une référence d'augmentation de la température des gaz d'échappement à partir duquel on considère que la chambre de combustion 3 est allumée. Ce seuil de température ST dépend de la turbomachine 1, de son état d'usure, et de ses conditions de fonctionnement. Avantageusement, ce seuil de température ST vaut 35 K.

Lors d'une troisième étape E13, un critère secondaire de détection CS est reçu et, selon un mode de réalisation privilégié, mémorisé. Le critère secondaire de détection CS permet de déterminer un état de la turbomachine 1 qui influe sur la température des gaz d'échappement. En fonction de critères de validation, le critère secondaire de détection CS permet ainsi de corriger la valeur du seuil de température ST reçu à l'étape précédente E12 afin d'améliorer la détection de l'allumage de la chambre de combustion 3 à partir de l'évolution de la température des gaz d'échappement.

Lors d'une quatrième étape E14, le seuil de température ST est actualisé en fonction du critère secondaire CS de détection reçu à l'étape précédente E13. Avantageusement, l'actualisation consiste en un abaissement de la valeur dudit seuil ST si le critère secondaire CS est validé, et en le maintien de la valeur dudit seuil ST sinon. En effet, lorsque le critère secondaire CS est validé, la turbomachine 1 est potentiellement dans un état de fonctionnement tel que la température des gaz d'échappement ne suit pas une évolution nominale, par exemple elle a déjà augmenté indépendamment de l'allumage de la chambre de combustion 3. Ceci peut être dû à un premier démarrage avorté, ou à un phénomène de décollement en aval de la section de compresseur 2. Ainsi, l'abaissement de la valeur du seuil ST permet de détecter l'allumage de la chambre de combustion 3 plus rapidement, voire même de s'assurer que l'allumage de la chambre 3 est détecté. De la même manière, l'actualisation de la valeur du seuil de température ST dépend de la turbomachine 1, de son état d'usure, et de ses conditions de fonctionnement. Avantageusement, lorsque le critère secondaire CS est validé, la valeur du seuil de température ST actualisé est de 15K.

Lors d'une cinquième étape E15, une deuxième mesure de la température MT2 des gaz d'échappement est reçue après la tentative d'allumage de la chambre de combustion 3 et, selon un mode de réalisation privilégié, mémorisée. Avantageusement, une pluralité de deuxièmes mesures MT2 de la température des gaz d'échappement est successivement reçue.

Lors d'une sixième étape E16, le seuil de température ST actualisé est comparé à la différence entre la deuxième MT2 et la première mesure MT1 de température des gaz d'échappement reçus aux étapes précédentes. Avantageusement, la sixième étape E16 est répétée successivement avec la pluralité des deuxièmes mesures MT2.

Lors d'une dernière étape E17, l'état d'allumage de la chambre de combustion est déterminé en fonction du résultat de l'étape précédente de comparaison E16. Plus précisément, si la différence entre la deuxième MT2 et la première MT1 mesure de température des gaz d'échappement est supérieure au seuil de température ST actualisé, alors la chambre de combustion 3 est considérée comme allumée. Sinon, elle est considérée comme éteinte. Par conséquent, l'état E17 permet de conclure à la réussite ou à l'échec de la tentative d'allumage de la chambre de combustion 3 de la turbomachine 1. Le cas échéant, une alerte peut être remontée au pilote, si l'état d'extinction est déterminé à la suite de plusieurs tentatives d'allumage.

Les étapes du premier mode de réalisation du procédé de détection E peuvent être mises en oeuvre dans un ordre différent de celui précédemment décrit. Notamment, l'étape de réception E12 du seuil de température ST peut être mise en œuvre indépendamment des étapes de réception E11 et E15 de la première MT1 et de la deuxième MT2 mesure de température. Le seuil de température ST peut ainsi être mémorisé une seule fois, au premier démarrage de la turbomachine 1, puis être utilisé systématiquement à chaque mise en oeuvre du procédé E de détection. De même, la réception E13 et l'actualisation E14 du critère secondaire de détection CS peuvent être mises en oeuvre avant la réception E11 de la première mesure de température MT1.

Différents critères secondaires CS de détection peuvent être utilisés dans le procédé de détection E d'allumage.

Un premier critère secondaire CS1 est une information relative à l'évolution de la pression en sortie de l'étage haute pression 23 le plus en aval de la section de compresseur 2 de la turbomachine 1, par rapport au sens de la circulation d'air. En effet, comme illustré sur la figure 3, lors de l'allumage de la chambre de combustion 3 il se produit une brusque augmentation de cette pression, également appelée saut de pression. Ainsi, ce premier critère secondaire CS1 sera validé si ledit saut de pression est détecté. Pour cela, des mesures successives de la pression en sortie de l'étage haute pression 23 de la section de compresseur 2 sont reçues. Avantageusement, ces mesures sont espacées d'une centaine de millisecondes, par exemple 200 ms. Si l'écart entre les valeurs de mesures successives est supérieur à un certain seuil de pression prédéterminé, alors le saut de pression est détecté et le critère secondaire reçu CS1 est validé. Avantageusement, le seuil de saut de pression est issu d'essais moteurs, et vaut par exemple 4% de la valeur de la mesure initiale de pression acquise. En tout état de cause, le premier critère secondaire CS1 est utilisé uniquement lorsqu'un démarrage de la turbomachine 1 est en cours, afin d'en limiter l'impact.

Un deuxième critère secondaire CS2 est une information relative au régime de la turbomachine 1, c'est-à-dire à la vitesse de rotation d'un arbre rotatif 5, par exemple l'arbre haute pression 5.

Ce deuxième critère CS2 est avantageusement utilisé dans le cas où le régime de la turbomachine 1 stagne à un régime inférieur à son seuil de ralenti SR, mais supérieur au seuil maximal de ventilation SMV. En effet, lorsque le régime du moteur franchit le seuil maximal de ventilation SMV, par exemple 7000 tours par minute, on considère que la chambre de combustion 3 est allumée. En effet ce seuil SMV est déterminé comme étant le seuil maximal franchissable avec uniquement le couple fournit par le démarreur. Sans le couple produit par la combustion, ce seuil SMV n'est pas franchissable, et son franchissement indique donc que la chambre de combustion 3 est allumée. Ce seuil SMV peut être déterminé expérimentalement par des essais de ventilation sur la turbomachine 1.

Pour valider ce deuxième critère CS2, on confirme tout d'abord l'état de fonctionnement de la turbomachine 1 correspondant à une stagnation du régime moteur. Pour cela, l'évolution du régime moteur est contrôlée pendant une durée prédéterminée T1, typiquement 20 secondes. Cette durée T1 correspond au seuil de temps maximum pendant lequel le régime moteur peut être maintenu au-dessus du seuil maximal de ventilation SMV sans démarreur. Cette durée T1 dépend en outre du type de turbomachine 1 et de son niveau d'usure. Le deuxième critère secondaire CS2 est donc validé si le régime moteur est compris dans l'intervalle s'étendant entre son seuil maximal de ventilation SMV et son seuil de ralenti SR pendant la durée correspondant au seuil de temps maximum T1 précédemment décrite.

Avantageusement, le deuxième critère secondaire CS2 est considéré comme validé si, on outre, les conditions suivantes sont remplies pendant la durée correspondant au seuil de temps maximum T1 précédemment décrite :
- la vanne d'arrivée du carburant au sein de la chambre de combustion 3 est ouverte, et
- le démarreur est coupé.

La condition relative à l'ouverture de la vanne d'arrivée permet de ne pas risquer de détecter de faux allumage alors que le carburant n'est pas fourni à la chambre de combustion 3. Cette condition de validité supplémentaire permet de ne pas actualiser le seuil de température ST dans le cas où la vanne d'arrivée a été fermée, c'est-à-dire lorsque le démarrage a été annulé ou que la mission est terminée. La logique du procédé de détection est ainsi remise à zéro pour le rallumage et/ou le démarrage suivant.

Dans un deuxième mode de réalisation, en référence à la figure 2b, le procédé de détection E comprend une première étape E21 de réception d'un premier seuil de régime moteur SRM1, par exemple le seuil maximal de ventilation précédemment SMV décrit, de 7000 tours par minute.

Lors d'une deuxième étape E22, une mesure du régime moteur MRM est reçue et, selon un mode de réalisation privilégié, mémorisée.

Lors d'une troisième étape E23, la mesure reçue MRM est comparée au premier seuil de régime moteur SRM1.

Lors d'une quatrième étape E24, l'état d'allumage de la chambre de combustion 3 est déterminé en fonction du résultat de l'étape de comparaison E23. En l'espèce, si la mesure MRM reçue est supérieure au premier seuil de régime SMR1 moteur, alors la chambre de combustion 3 est considérée comme allumée. En effet, comme précédemment évoqué, le premier seuil de régime moteur SMR1 est avantageusement choisi de sorte à ce qu'il indique la frontière à partir de laquelle la turbomachine 1 ne pourrait fonctionner sans l'énergie issue de la chambre de combustion 3 allumée. Si la mesure MRM reçue est inférieure au premier seuil de régime SMR1 moteur, alors la chambre de combustion 3 est considérée comme éteinte. Le cas échéant, une alerte peut être remontée au pilote, si l'état d'extinction est déterminé à la suite de plusieurs tentatives d'allumage.

Les étapes du second mode de réalisation du procédé de détection E peuvent être mises en oeuvre dans un ordre différent de celui précédemment décrit. Notamment, l'étape de réception E21 du premier seuil SRM1 de régime moteur peut être mise en oeuvre indépendamment de l'étape de réception E22 d'une mesure de régime moteur MRM. Le premier seuil SRM1 de régime moteur peut ainsi être mémorisé une seule fois, au premier démarrage de la turbomachine 1, puis être utilisé systématiquement à chaque mise en oeuvre du procédé E de détection.

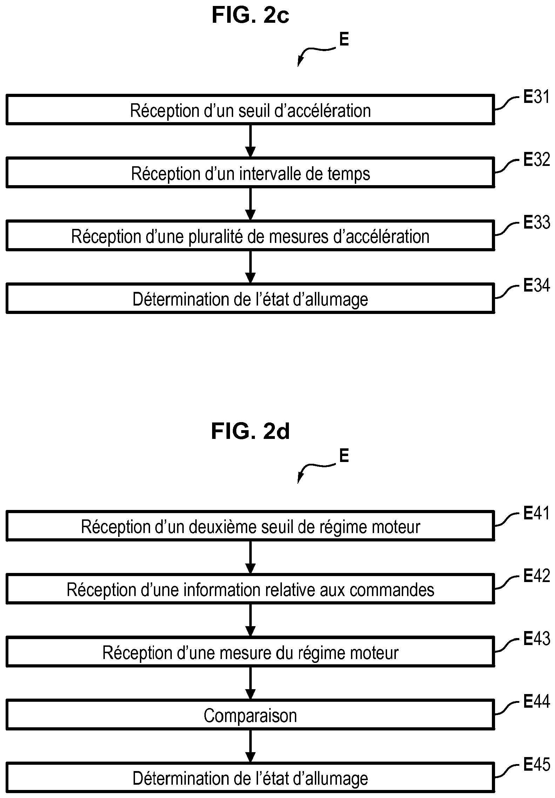

En référence à la figure 2c, dans un troisième mode de réalisation du procédé de détection E complémentaire du second mode de réalisation précédemment décrit, une étape de réception E31 d'un seuil d'accélération du régime moteur SA est mise en oeuvre. Le seuil d'accélération SA correspond à une augmentation du régime moteur telle que le moteur est nécessairement entraîné par la combustion mise en oeuvre au sein de la chambre de combustion 3. Ce seuil d'accélération SA dépend du type de turbomachine 1 et de son niveau d'usure, et correspond par exemple à une accélération du régime moteur de 50 tours par minute à chaque seconde.

Puis, un intervalle de temps de mesure IT est également reçu E32 et, selon un mode de réalisation privilégié, mémorisé. Cet intervalle de temps IT vaut par exemple une seconde.

Par la suite, une pluralité de mesures successives de l'accélération du régime moteur MA sont reçues E33 pendant l'intervalle de temps IT reçu à l'étape précédente E32, puis comparées avec le seuil d'accélération SA reçu lors de la première étape E31.

Enfin, l'état d'allumage de la chambre de combustion 3 est déterminé E34 en fonction des résultats de l'étape de comparaison E33. En l'espèce, si toutes les mesures d'accélération MA sont supérieures ou égales au seuil reçu SA, alors la chambre de combustion 3 est considérée comme allumée. Sinon la chambre de combustion 3 est considérée comme éteinte, et une alerte peut être remontée au pilote, si l'état d'extinction est déterminé à la suite de plusieurs tentatives d'allumage

Ce mode réalisation du procédé de détection E est avantageusement mis en œuvre afin de détecter des rallumages de la chambre de combustion 3, lorsque la turbomachine 1 est en fonctionnement au-dessus de son seuil maximal de ventilation SMV, et en dessous de son seuil de ralenti SR.

Les étapes du troisième mode de réalisation du procédé de détection peuvent être mises en oeuvre dans un ordre différent de celui précédemment décrit. Notamment, l'étape de réception E31, E32 d'un seuil d'accélération SA et d'un intervalle de temps de mesure IT peut être mise en oeuvre indépendamment de l'étape de réception E33 de la pluralité de mesures MA de l'accélération du régime moteur. Les seuils d'accélération SA et d'intervalle de temps IT peuvent ainsi être mémorisés une seule fois, au premier démarrage de la turbomachine 1, puis être utilisé systématiquement à chaque mise en oeuvre du procédé E de détection.

En référence à la figure 1, un turboréacteur 1 comprend un (ou plusieurs) calculateur(s) 7 configuré(s) pour contrôler le fonctionnement du turboréacteur 1. Un tel calculateur 7 comprend classiquement deux voies mettant en œuvre les mêmes opérations en parallèles, à partir des mêmes données reçues. En général, une des deux voies est subordonnée à l'autre. On parle de voie active, et de voie passive. Les voies du calculateur 7 reçoivent des mesures en provenance d'un (ou plusieurs) capteur(s) de température 6 des gaz d'échappement disposé(s) en aval de la chambre de combustion 3. Un tel capteur 6, ou sonde, mesure ainsi la température des gaz d'échappement. Un système de détection 8 de l'allumage d'une turbomachine comprend donc avantageusement un capteur de température 6 et un tel calculateur 7.

Le calculateur 7 est par ailleurs configuré pour mettre en œuvre un procédé de détection E d'allumage selon l'un des modes de réalisation précédemment décrit. Pour cela, le calculateur 7 reçoit également d'autres mesures en provenance d'autres capteurs, comme par exemple des mesures relatives au régime moteur, ou à la pression en aval de la section de compresseur 2, par exemple de l'étage haute pression 23.

En cas de disfonctionnement de la voie passive le calculateur 7 peut être amené à être réinitialisé automatiquement et donc perdre tous les calculs en cours. De là, le système 8 doit être capable de se réinitialiser à l'état d'allumage de la chambre de combustion 3. Pour cela, la voie passive peut tout d'abord récupérer l'état d'allumage par communication avec la voie active.

Alternativement, en référence à la figure 2d, un quatrième mode de réalisation du procédé de détection d'allumage E de la chambre de combustion 3 est mis en œuvre par la voie passive du calculateur 7.

Lors d'une première étape E41, un deuxième seuil de régime moteur SRM2 est reçu et, selon un mode de réalisation privilégié, mémorisé. Ce deuxième seuil de régime moteur SRM2 correspond par exemple au seuil de ralenti SR précédemment décrit.

Lors d'une deuxième étape E42, une information relative à l'état de commandes de la turbomachine est également reçue, par exemple les commandes des pilotes relatives à la demande en puissance.

Lors d'une troisième étape E43, une mesure du régime moteur MRM est reçue et, selon un mode de réalisation privilégié, mémorisée.

Lors d'une quatrième étape E44, la mesure reçue MRM à l'étape précédente est comparée au deuxième seuil de régime moteur SRM2.

Lors d'une cinquième étape E45, l'état d'allumage de la chambre de combustion 3 est déterminé en fonction du résultat de l'étape de comparaison E44 et de l'information relative à l'état des commandes. En l'espèce, si le régime moteur est supérieur ou égal à son régime de ralenti SR (i.e. la turbomachine 1 est en fonctionnement stable au-dessus de son ralenti) et que les commandes pilote sont cohérentes, alors la voie passive en conclut que la chambre de combustion 3 est allumée et contrôlée par la voie active.

Les étapes du quatrième mode de réalisation du procédé de détection E peuvent être mises en oeuvre dans un ordre différent de celui précédemment décrit. Notamment, l'étape de réception E21 du second seuil SRM2 de régime moteur peut être mise en oeuvre indépendamment de l'étape de réception E22 d'une mesure de régime moteur MRM. Le second seuil SRM2 de régime moteur peut ainsi être mémorisé une seule fois, au premier démarrage de la turbomachine 1, puis être utilisé systématiquement à chaque mise en oeuvre du procédé E de détection. De même les étapes de réception E42, E43 d'une information relative à l'état des commandes et de mesure de régime moteur MRM peuvent être inversées.

Avantageusement, les différents modes de réalisation précédemment décrits sont mis en oeuvre en parallèle par les voies du calculateur 7, indépendamment l'une de l'autre. De cette manière, la première logique de contrôle qui détecte l'allumage de la chambre de combustion 3 est en mesure de renvoyer une information correspondante au pilote.

Ainsi, si la turbomachine 1 est démarrée alors que la sonde de température 6 des gaz d'échappement est invalide, la logique correspondant au deuxième mode de réalisation du procédé de détection E permettra tout de même de détecter l'allumage de la chambre de combustion 3.

De la même manière, si une ou plusieurs voies du calculateur 7 sont réinitialisées de manière intempestive, la logique correspondant au quatrième mode de réalisation du procédé de détection E permettra tout de même de détecter l'allumage de la chambre de combustion 3.

De même, si le régime moteur stagne après une coupure d'arrivée de carburant lors d'un démarrage de la turbomachine 1, les logiques de détermination mises en oeuvre dépendront du niveau de régime de stagnation (démarrage au sol ou redémarrage en vol).

Si le régime moteur est inférieur au seuil maximal de ventilation SMV, alors le premier mode de réalisation du procédé de détection E permettra de détecter l'allumage de la chambre de combustion 3, à l'aide du premier critère secondaire CS1 de saut de pression.

Si le régime moteur est transitoire, alors c'est le deuxième mode de réalisation du procédé de détection E qui permettra de détecter l'allumage de la chambre de combustion 3, en utilisant le seuil maximal de ventilation SMV comme premier seuil de régime moteur SRM1.

Si le régime moteur est supérieur au seuil maximal de ventilation SMV, alors le premier mode de réalisation du procédé de détection E permettra de détecter l'allumage de la chambre de combustion 3, à l'aide du second critère secondaire CS2 de régime moteur.

## Revendications

1. Procédé de détection (E) d'allumage d'une chambre de combustion (3) de turbomachine (1), le procédé (E) comprenant les étapes de :
• réception (E11) d'une première mesure (MT1) de la température de gaz d'échappement en aval de la chambre de combustion (3), avant une tentative d'allumage de ladite chambre de combustion (3),
• réception (E12) d'un seuil de température (ST),
• réception (E13) d'un critère secondaire de détection (CS),
• actualisation (E14) du seuil de température reçu (ST) en fonction du critère secondaire de détection reçu (CS),
• réception (E15) d'une deuxième mesure (MT2) de la température des gaz d'échappement, après la tentative d'allumage de la chambre de combustion (3),
• comparaison (E16) entre le seuil de température (ST) actualisé et la différence entre la première (MT1) et la deuxième (MT2) mesure de température des gaz d'échappement, et
• détermination (E17) de l'état d'allumage de la chambre de combustion (3), correspondant à la réussite ou à l'échec de la tentative d'allumage, en fonction du résultat de l'étape de comparaison (E16).

2. Procédé (E) selon la revendication 1, dans lequel l'étape de réception (E11) d'une première mesure (MT1) de la température des gaz d'échappement est mise en œuvre à la fin d'une phase d'initiation de la séquence de démarrage de la turbomachine (1), lorsque la température des gaz d'échappement est minimale.

3. Procédé (E) selon l'une des revendications 1 ou 2, dans lequel l'actualisation (E14) du seuil de température (ST) consiste en un abaissement de la valeur dudit seuil (ST) si le critère secondaire (CS) est validé, et en le maintien de la valeur dudit seuil (ST) sinon.

4. Procédé (E) selon la revendication 3, dans lequel le critère secondaire (CS) est une information relative à l'évolution de la pression en sortie de compresseur haute pression (23) de la turbomachine (1), le critère secondaire (CS) étant validé si une augmentation brusque de ladite pression est détectée.

5. Procédé (E) selon la revendication 3, dans lequel le critère secondaire (CS) est une information relative au régime moteur de la turbomachine (1), le critère secondaire (CS) étant validé si le régime moteur est compris dans un intervalle déterminé pendant une durée déterminée (T1).

6. Procédé (E) selon l'une des revendications 1 à 5, comprenant en outre des étapes de :
• réception (E21) d'un premier seuil (SRM1) de régime moteur,
• réception (E22) d'une mesure du régime moteur (MRM),
• comparaison (E23) de la mesure (MRM) au premier seuil de régime moteur (SRM1), et
• détermination (E24) de l'état d'allumage de la chambre de combustion (3) en fonction du résultat de l'étape de comparaison (E23).

7. Procédé (E) selon la revendication 6, comprenant en outre des étapes de :
• réception (E31) d'un seuil d'accélération (SA) du régime moteur,
• réception (E32) d'un intervalle de temps (IT) de mesure,
• réception (E33) d'une pluralité de mesures successives (MA) de l'accélération du régime moteur pendant l'intervalle de temps (IT) de mesure reçu à l'étape précédente (E32), et
• comparaison (E34) de la pluralité de mesures (MA) successives avec le seuil d'accélération reçu (SA), et
• détermination (E35) de l'état d'allumage de la chambre de combustion (3) en fonction du résultat de l'étape de comparaison (E34).

8. Procédé (E) selon l'une des revendications 1 à 7, comprenant en outre des étapes de :
• réception (E41) d'un deuxième seuil de régime moteur (SRM2),
• réception (E42) d'une information relative à l'état des commandes de la turbomachine (1),
• réception (E43) d'une mesure du régime moteur (MRM),
• comparaison (E44) de la mesure (MRM) au deuxième seuil de régime moteur (SRM2), et
• détermination (E45) de l'état d'allumage de la chambre de combustion (3) en fonction du résultat de l'étape de comparaison (E44) et de l'information relative à l'état des commandes.

9. Système de détection (8) de l'allumage d'une chambre de combustion (3) de turbomachine (1), le système (8) comprenant un capteur (6) de température des gaz d'échappement, le système (8) comprenant en outre un calculateur (7) configuré pour mettre en oeuvre un procédé (E) selon l'une des revendications 1 à 8.

10. Turbomachine comprenant un système (8) selon la revendication 9.

## Patentansprüche

1. Verfahren zum Erkennen (E) der Zündung einer Brennkammer (3) eines Turbinentriebwerks (1), wobei das Verfahren (E) die folgenden Schritte umfasst:
• Empfangen (E11) einer ersten Messung (MT1) der Abgastemperatur stromabwärts der Brennkammer (3) vor dem Versuch, die Brennkammer (3) zu zünden,
• Empfangen (E12) eines Temperaturschwellenwerts (ST),
• Empfangen (E13) eines sekundären Erkennungskriteriums (CS),
• Aktualisieren (E14) des empfangenen Temperaturschwellenwerts (ST) entsprechend den empfangenen sekundären Erkennungskriterien (CS),
• Empfangen (E15) einer zweiten Messung (MT2) der Abgastemperatur nach dem Versuch, die Brennkammer (3) zu zünden,
• Vergleichen (E16) des aktualisierten Temperaturschwellenwerts (ST) und der Differenz zwischen der ersten (MT1) und der zweiten (MT2) Messung der Abgastemperatur, und
• Bestimmen (E17) des Zündzustandes der Brennkammer (3), der dem Erfolg oder Misserfolg des Zündversuchs entspricht, in Abhängigkeit vom Ergebnis des Vergleichsschrittes (E16).

2. Verfahren (E) nach Anspruch 1, wobei der Schritt des Empfangens (E11) einer ersten Messung (MT1) der Abgastemperatur am Ende einer Initiierungsphase der Startsequenz des Turbinentriebwerks (1) durchgeführt wird, wenn die Abgastemperatur minimal ist.

3. Verfahren (E) nach einem der Ansprüche 1 oder 2, **dadurch gekennzeichnet, dass** die Aktualisierung (E14) des Temperaturschwellenwerts (ST) darin besteht, den Wert des Schwellenwerts (ST) zu senken, wenn das sekundäre Kriterium (CS) validiert ist, und andernfalls den Wert des Schwellenwerts (ST) beizubehalten.

4. Verfahren (E) nach Anspruch 3, wobei das sekundäre Kriterium (CS) eine Information über die Entwicklung des Drucks am Ausgang des Hochdruckverdichters (23) der Turbinentriebwerks (1) ist, wobei das sekundäre Kriterium (CS) validiert wird, wenn ein plötzlicher Anstieg des Drucks festgestellt wird.

5. Verfahren (E) nach Anspruch 3, wobei das sekundäre Kriterium (CS) eine Information ist, die sich auf die Motordrehzahl des Turbinentriebwerks (1) bezieht, wobei das sekundäre Kriterium (CS) validiert wird, wenn die Motordrehzahl während einer bestimmten Zeitspanne (T1) innerhalb eines bestimmten Bereichs liegt.

6. Verfahren (E) nach einem der Ansprüche 1 bis 5, ferner die folgenden Schritte umfassend:
• Empfangen (E21) eines ersten Motordrehzahlschwellenwerts (SRM1),
• Empfangen (E22) einer Messung der Motordrehzahl (MRM),
• Vergleichen (E23) der Messung (MRM) mit dem ersten Motordrehzahlschwellenwert (SRM1), und
• Bestimmen (E24) des Zündzustandes der Brennkammer (3) in Abhängigkeit vom Ergebnis des Vergleichsschrittes (E23).

7. Verfahren (E) nach Anspruch 6, ferner die folgenden Schritte umfassend:
• Empfangen (E31) eines ersten Beschleunigungsschwellenwerts (SA) der Motordrehzahl,
• Empfangen (E32) eines Messzeitintervalls (IT),
• Empfangen (E33) einer Vielzahl von aufeinanderfolgenden Messungen (MA) der Motordrehzahlbeschleunigung während des im vorherigen Schritt (E32) empfangenen Messzeitintervalls (IT), und
• Vergleichen (E34) der Vielzahl von aufeinanderfolgenden Messungen (MA) mit dem empfangenen Beschleunigungsschwellenwert (SA), und
• Bestimmen (E35) des Zündzustandes der Brennkammer (3) in Abhängigkeit vom Ergebnis des Vergleichsschrittes (E34).

8. Verfahren (E) nach einem der Ansprüche 1 bis 7, ferner die folgenden Schritte umfassend:
• Empfangen (E41) eines zweiten Motordrehzahlschwellenwerts (SRM2),
• Empfangen (E42) von Informationen über den Steuerzustand des Turbinentriebwerks (1),
• Empfangen (E43) einer Messung der Motordrehzahl (MRM),
• Vergleichen (E44) der Messung (MRM) mit dem zweiten Motordrehzahlschwellenwert (SRM2), und
• Bestimmen (E45) des Zündzustandes der Brennkammer (3) in Abhängigkeit vom Ergebnis des Vergleichsschrittes (E44) und von den Informationen über den Steuerzustand.

9. System (8) zur Erkennung der Zündung einer Brennkammer (3) eines Turbinentriebwerks (1), wobei das System (8) einen Abgastemperatursensor (6) umfasst, wobei das System (8) ferner einen Computer (7) umfasst, der so konfiguriert ist, dass er ein Verfahren (E) nach einem der Ansprüche 1 bis 8 implementiert.

10. Turbinentriebwerk mit einem System (8) nach Anspruch 9.

## Claims

1. A method (E) for detecting the ignition of a turbine engine (1) combustion chamber (3), the method (E) comprising the steps of:
• receiving (E11) a first measurement (MT1) of the exhaust gas temperature downstream of the combustion chamber (3), before an attempt to ignite said combustion chamber (3),
• receiving (E12) a temperature threshold (ST),
• receiving (E13) a secondary detection criterion (CS),
• updating (E14) the temperature threshold (ST) received depending on the secondary detection criterion (CS) received,
• receiving (E15) a second measurement (MT2) of the exhaust gas temperature after the attempt to ignite the combustion chamber (3),
• comparing (E16) the updated temperature threshold (ST) and the difference between the first (MT1) and the second (MT2) measurement of the exhaust gas temperature, and
• determining (E17) the ignition state of the combustion chamber (3), corresponding to the success or to the failure of the ignition attempt, depending on the result of the comparison step (E16).

2. The method (E) according to claim 1, wherein the step (E11) of receiving a first measurement (MT1) of the exhaust gas temperature is implemented at the end of a phase of initiation of the starting sequence of the turbine engine (1), when the exhaust gas temperature is minimal.

3. The method (E) according to one of claims 1 or 2, wherein the updating (E14) of the temperature threshold (ST) consists of a reduction of the value of said threshold (ST) if the secondary criterion (CS) is validated, and of the retention of the value of said threshold (ST) otherwise.

4. The method (E) according to claim 3, wherein the secondary criterion (CS) is information relating to the evolution of the high-pressure compressor output pressure (23) of the turbine engine (1), the secondary criterion (CS) being validated if a sudden increase of said pressure is detected.

5. The method (E) according to claim 3, wherein the secondary criterion (CS) is information relating to the engine speed of the turbine engine (1), the secondary criterion (CS) being validated if the engine speed is comprised in a determined interval for a determined duration (T1).

6. The method (E) according to one of claims 1 to 5, further comprising the steps of:
• receiving (E21) a first engine speed threshold (SRM1),
• receiving (E22) a measurement (MRM) of the engine speed,
• comparing (E23) the measurement (MRM) to the first engine speed threshold (SRM1), and
• determining (E24) the ignition state of the combustion chamber (3) depending on the result of the comparison step (E23).

7. The method (E) according to claim 6, further comprising the steps of:
• receiving (E31) an acceleration threshold (SA) of the engine speed,
• receiving (E32) a measurement time interval (IT),
• receiving (E33) a plurality of successive measurements (MA) of the acceleration of the engine speed during the measurement time interval (IT) received in the preceding step (E32), and
• comparing (E34) the plurality of successive measurements (MA) with the acceleration threshold (SA) received, and
• determining (E35) the ignition state of the combustion chamber (3) depending on the result of the comparison step (E34).

8. The method (E) according to one of claims 1 to 7, further comprising the steps of:
• receiving (E41) a second engine speed threshold (SRM2),
• receiving (E42) information relating to the control state of the turbine engine (1),
• receiving (E43) a measurement of the engine speed (MRM),
• comparing (E44) the measurement (MRM) to the second engine speed threshold (SRM2), and
• determining (E45) the ignition state of the combustion chamber (3) depending on the result of the comparison step (E44) and the information relating to the control state.

9. A system (8) for detecting the ignition of a combustion chamber (3) of a turbine engine (1), the system (8) comprising an exhaust gas temperature sensor (6), the system (8) further comprising a computer (7) configured to implement a method (E) according to one of claims 1 to 8.

10. A turbine engine comprising a system (8) according to claim 9.
